# EUROPEAN PATENT APPLICATION

(11) **EP 4 716 320 A1**
(43) Date of publication of application: **25.03.2026**
(21) Application number: 24810188.3
(22) Date of filing: 30.04.2024
(51) Int. Cl.: H04W 60/00

(54) **METHOD AND APPARATUS FOR CAPABILITY REGISTRATION, AND STORAGE MEDIUM**

(30) Priority: 19.05.2023 CN 202310575213
(71) Applicant: Datang Mobile Communications Equipment Co., Ltd., Beijing 100085 (CN)
(72) Inventor: CHENG, Zhimi, Beijing 100085 (CN); SONG, Yaqin, Beijing 100085 (CN)
(74) Representative: Studio Torta S.p.A.
(86) International application number: PCT/CN2024/090999
(87) International publication number: WO 2024/239941

(57) **Abstract**

The present disclosure provides a method and an apparatus for capability registration and a storage medium. The method for capability registration is applicable to a terminal and comprises: sending a registration request message to a network, wherein the registration request message is configured for capability registration and comprises one or more of the following information: a registration type, a security parameter, a capability registration identifier, a capability type, a capability reporting identifier, and capability information.

## Description

### CROSS-REFERENCES TO RELATED APPLICATIONS

The present application claims priority to Chinese Patent Application No. 202310575213.6 filed on May 19, 2023, entitled "Method and Apparatus for Capability Registration, and Storage Medium", which is hereby incorporated by reference in its entirety.

### FIELD

The present application relates to the field of communications, and in particular, to methods and apparatuses for capability registration, and storage media.

### BACKGROUND

The 6th Generation mobile network (6G) will evolve into a comprehensive network service platform that provides diverse and operational network services, creating value for users. And a capability needs to be registered and reported before it may be provided for use.

However, there is no registration method for capabilities in the prior art, which makes it impossible to report and update capabilities in data services, artificial intelligence (AI) services, and multi network service scenarios, resulting in the inability to provide corresponding services.

### BRIEF SUMMARY

Embodiments of the present application provide methods and apparatuses for capability registration, and storage media to solve a technical problem of not being able to provide 6G corresponding network services in the prior art.

Embodiments of the present application provide a method for capability registration, performed by a user equipment (UE), including:
transmitting a registration request message to a network, where the registration request message is used for capability registration, and the registration request message includes one or more pieces of the following information:
a registration type;
a security parameter;
a capability registration identifier;
a capability type;
a capability reporting identifier; or
capability information.

In some embodiments, the method further includes:
obtaining a registration response message fed back from the network, where the registration response message is used to indicate success or failure of the capability registration;
   or,
obtaining a reporting response message fed back from the network, where the reporting response message is used to indicate success or failure of capability reporting.

In some embodiments, transmitting the registration request message to the network includes:
in case that there is only one capability management function in the network, transmitting the registration request message to the capability management function.

In some embodiments, transmitting the registration request message to the network includes:
in case that there are multiple capability management functions in the network, transmitting the registration request message to a capability management function corresponding to the capability registration identifier.

In some embodiments, the registration type includes an initial registration type and a mobile registration update.

In some embodiments, the security parameter includes capability authentication data.

In some embodiments, the capability registration identifier is used to represent one or more capability registration indications.

In some embodiments, the capability reporting identifier is used to represent one or more capability reporting indications.

In some embodiments, the capability type includes one or more of the following types:
a data node type;
an artificial intelligence (AI) node type;
a callable capability type; or
an open capability type.

In some embodiments, the capability information includes one or more pieces of the following information:
a data collection capability;
a data preprocessing capability;
a data forwarding capability;
a data storage capability;
a data analysis capability;
a protocol supported by the UE;
an application (APP) supported by the UE;
an artificial intelligence (AI) model supported by the UE; or
an artificial intelligence (AI) algorithm supported by the UE.

Embodiments of the present application provide a method for capability registration, performed by a network device, including:
obtaining a registration request message transmitted from a user equipment (UE), where the registration request message transmitted from the UE is used for capability registration, and the registration request message transmitted from the UE includes one or more pieces of the following information:
a registration type;
a security parameter;
a capability registration identifier;
a capability type;
a capability reporting identifier; or
capability information.

In some embodiments, the method further includes:
performing UE capability authentication and/or security procedure based on the capability registration identifier and the capability type.

In some embodiments, the method further includes:
transmitting the registration request message to a capability management function, where the registration request message transmitted to the capability management function includes one or more pieces of the following information:
an authentication/security result;
a capability registration identifier; or
UE location information.

In some embodiments, transmitting the registration request message to the capability management function includes:
in case that there is only one capability management function in a network, transmitting the registration request message to the capability management function.

In some embodiments, transmitting the registration request message to the capability management function includes:
in case that there are multiple capability management functions in a network, transmitting the registration request message to a capability management function corresponding to the capability registration identifier.

In some embodiments, the method further includes:
transmitting a reporting request message to a capability management function, where the reporting request message includes one or more pieces of the following information:
an authentication/security result;
a capability reporting identifier; or
UE location information.

In some embodiments, transmitting the reporting request message to the capability management function includes:
in case that there is only one capability management function in a network, transmitting the reporting request message to the capability management function.

In some embodiments, transmitting the reporting request message to the capability management function includes:
in case that there are multiple capability management functions in a network, transmitting the reporting request message to a capability management function corresponding to the capability reporting identifier.

In some embodiments, the method further includes:
transmitting a registration response message to the UE, where the registration response message is used to indicate success or failure of the capability registration;
or,
transmitting a reporting response message to the UE, where the reporting response message is used to indicate success or failure of capability reporting.

In some embodiments, in case that the registration request message is further used for network registration, the method further includes:
performing UE network authentication and/or security procedure.

Embodiments of the present application provide a method for capability registration, performed by a capability management function, including:
obtaining a registration request message transmitted from a network device, where the registration request message transmitted from the network device is used for capability registration, and the registration request message transmitted from the network device includes one or more pieces of the following information:
an authentication/security result;
a capability registration identifier;
a capability reporting identifier; or
user equipment (UE) location information;
transmitting a registration response message to a UE, where the registration response message is used to indicate success or failure of the capability registration.

In some embodiments, the method further includes:
transmitting a reporting response message to the UE, where the reporting response message is used to indicate success or failure of capability reporting.

Embodiments of the present application provide a user equipment (UE), including a memory, a transceiver, and a processor, where
the memory is used for storing a computer program; the transceiver is used for transmitting and receiving data under control of the processor; and the processor is used for reading the computer program in the memory and performing the following operations:
transmitting a registration request message to a network, where the registration request message is used for capability registration, and the registration request message includes one or more pieces of the following information:
a registration type;
a security parameter;
a capability registration identifier;
a capability type;
a capability reporting identifier; or
capability information.

In some embodiments, the processor is further used for reading the computer program in the memory and performing the following operations:
obtaining a registration response message fed back from the network, where the registration response message is used to indicate success or failure of the capability registration;
   or,
obtaining a reporting response message fed back from the network, where the reporting response message is used to indicate success or failure of capability reporting.

In some embodiments, transmitting the registration request message to the network includes:
in case that there is only one capability management function in the network, transmitting the registration request message to the capability management function.

In some embodiments, transmitting the registration request message to the network includes:
in case that there are multiple capability management functions in the network, transmitting the registration request message to a capability management function corresponding to the capability registration identifier.

In some embodiments, the registration type includes an initial registration type and a mobile registration update.

In some embodiments, the security parameter includes capability authentication data.

In some embodiments, the capability registration identifier is used to represent one or more capability registration indications.

In some embodiments, the capability reporting identifier is used to represent one or more capability reporting indications.

In some embodiments, the capability type includes one or more of the following types:
a data node type;
an artificial intelligence (AI) node type;
a callable capability type; or
an open capability type.

In some embodiments, the capability information includes one or more pieces of the following information:
a data collection capability;
a data preprocessing capability;
a data forwarding capability;
a data storage capability;
a data analysis capability;
a protocol supported by the UE;
an application (APP) supported by the UE;
an artificial intelligence (AI) model supported by the UE; or
an artificial intelligence (AI) algorithm supported by the UE.

Embodiments of the present application provide a network device, including a memory, a transceiver, and a processor, where
the memory is used for storing a computer program; the transceiver is used for transmitting and receiving data under control of the processor; and the processor is used for reading the computer program in the memory and performing the following operations:
obtaining a registration request message transmitted from a user equipment (UE), where the registration request message transmitted from the UE is used for capability registration, and the registration request message transmitted from the UE includes one or more pieces of the following information:
a registration type;
a security parameter;
a capability registration identifier;
a capability type;
a capability reporting identifier; or
capability information.

In some embodiments, the processor is further used for reading the computer program in the memory and performing the following operations:
performing UE capability authentication and/or security procedure based on the capability registration identifier and the capability type.

In some embodiments, the processor is further used for reading the computer program in the memory and performing the following operations:
transmitting the registration request message to a capability management function, where the registration request message transmitted to the capability management function includes one or more pieces of the following information:
an authentication/security result;
a capability registration identifier; or
UE location information.

In some embodiments, transmitting the registration request message to the capability management function includes:
in case that there is only one capability management function in a network, transmitting the registration request message to the capability management function.

In some embodiments, transmitting the registration request message to the capability management function includes:
in case that there are multiple capability management functions in a network, transmitting the registration request message to a capability management function corresponding to the capability registration identifier.

In some embodiments, the processor is further used for reading the computer program in the memory and performing the following operations:
transmitting a reporting request message to a capability management function, where the reporting request message includes one or more pieces of the following information:
an authentication/security result;
a capability reporting identifier; or
UE location information.

In some embodiments, transmitting the reporting request message to the capability management function includes:
in case that there is only one capability management function in a network, transmitting the reporting request message to the capability management function.

In some embodiments, transmitting the reporting request message to the capability management function includes:
in case that there are multiple capability management functions in a network, transmitting the reporting request message to a capability management function corresponding to the capability reporting identifier.

In some embodiments, the processor is further used for reading the computer program in the memory and performing the following operations:
transmitting a registration response message to the UE, where the registration response message is used to indicate success or failure of the capability registration;
   or,
transmitting a reporting response message to the UE, where the reporting response message is used to indicate success or failure of capability reporting.

In some embodiments, in case that the registration request message is further used for network registration, the processor is further used for reading the computer program in the memory and performing the following operations:
performing UE network authentication and/or security procedure.

Embodiments of the present application provide a capability management function, including a memory, a transceiver, and a processor, where
the memory is used for storing a computer program; the transceiver is used for transmitting and receiving data under control of the processor; and the processor is used for reading the computer program in the memory and performing the following operations:
obtaining a registration request message transmitted from a network device, where the registration request message transmitted from the network device is used for capability registration, and the registration request message transmitted from the network device includes one or more pieces of the following information:
an authentication/security result;
a capability registration identifier;
a capability reporting identifier; or
user equipment (UE) location information;
transmitting a registration response message to a UE, where the registration response message is used to indicate success or failure of the capability registration.

In some embodiments, the processor is used for reading the computer program in the memory and performing the following operations:
transmitting a reporting response message to the UE, where the reporting response message is used to indicate success or failure of capability reporting.

Embodiments of the present application provide an apparatus for capability registration, including:
a first transmitting module, used for transmitting a registration request message to a network, where the registration request message is used for capability registration, and the registration request message includes one or more pieces of the following information:
a registration type;
a security parameter;
a capability registration identifier;
a capability type;
a capability reporting identifier; or
capability information.

In some embodiments, the apparatus further includes:
a third obtaining module, used for obtaining a registration response message fed back from the network, where the registration response message is used to indicate success or failure of the capability registration;
   or,
a fourth obtaining module, used for obtaining a reporting response message fed back from the network, where the reporting response message is used to indicate success or failure of capability reporting.

In some embodiments, the first transmitting module includes:
a first transmitting unit, used for transmitting, in case that there is only one capability management function in a network, the registration request message to the capability management function.

In some embodiments, the first transmitting module includes:
a second transmitting unit, used for transmitting, in case that there are multiple capability management functions in a network, the registration request message to a capability management function corresponding to the capability registration identifier.

In some embodiments, the registration type includes an initial registration type and a mobile registration update.

In some embodiments, the security parameter includes capability authentication data.

In some embodiments, the capability registration identifier is used to represent one or more capability registration indications.

In some embodiments, the capability reporting identifier is used to represent one or more capability reporting indications.

In some embodiments, the capability type includes one or more of the following types:
a data node type;
an artificial intelligence (AI) node type;
a callable capability type; or
an open capability type.

In some embodiments, the capability information includes one or more pieces of the following information:
a data collection capability;
a data preprocessing capability;
a data forwarding capability;
a data storage capability;
a data analysis capability;
a protocol supported by the UE;
an application (APP) supported by the UE;
an artificial intelligence (AI) model supported by the UE; or
an artificial intelligence (AI) algorithm supported by the UE.

Embodiments of the present application provide an apparatus for capability registration, including:
a first obtaining module, used for obtaining a registration request message transmitted from a user equipment (UE), where the registration request message transmitted from the UE is used for capability registration, and the registration request message transmitted from the UE includes one or more pieces of the following information:
a registration type;
a security parameter;
a capability registration identifier;
a capability type;
a capability reporting identifier; or
capability information.

In some embodiments, the apparatus further includes:
a first performing module, used for performing UE capability authentication and/or security procedure based on the capability registration identifier and the capability type.

In some embodiments, the apparatus further includes:
a third transmitting module, used for transmitting the registration request message to a capability management function, where the registration request message transmitted to the capability management function includes one or more pieces of the following information:
an authentication/security result;
a capability registration identifier; or
UE location information.

In some embodiments, the first obtaining module includes:
a third transmitting unit, used for transmitting, in case that there is only one capability management function in a network, the registration request message to the capability management function.

In some embodiments, the first obtaining module includes:
a fourth transmitting unit, used for transmitting, in case that there are multiple capability management functions in a network, the registration request message to a capability management function corresponding to the capability registration identifier.

In some embodiments, the apparatus further includes:
a fourth transmitting module, used for transmitting a reporting request message to a capability management function, where the reporting request message includes one or more pieces of the following information:
an authentication/security result;
a capability reporting identifier; or
UE location information.

In some embodiments, the first obtaining module includes:
a fifth transmitting unit, used for transmitting, in case that there is only one capability management function in a network, the reporting request message to the capability management function.

In some embodiments, the first obtaining module includes:
a sixth transmitting unit, used for transmitting, in case that there are multiple capability management functions in a network, the reporting request message to a capability management function corresponding to the capability reporting identifier.

In some embodiments, the apparatus further includes:
a fifth transmitting module, used for transmitting a registration response message to the UE, where the registration response message is used to indicate success or failure of the capability registration;
   or,
a sixth transmitting module, used for transmitting a reporting response message to the UE, where the reporting response message is used to indicate success or failure of capability reporting.

In some embodiments, in case that the registration request message is further used for network registration, the apparatus further includes:
a second performing module, used for performing UE network authentication and/or security procedure.

Embodiments of the present application provide an apparatus for capability registration, including:
a second obtaining module, used for obtaining a registration request message transmitted from a network device, where the registration request message transmitted from the network device is used for capability registration, and the registration request message transmitted from the network device includes one or more pieces of the following information:
an authentication/security result;
a capability registration identifier;
a capability reporting identifier; or
user equipment (UE) location information;
a second transmitting module, used for transmitting a registration response message to a UE, where the registration response message is used to indicate success or failure of the capability registration.

In some embodiments, the apparatus further includes:
a seventh transmitting module, used for transmitting a reporting response message to the UE, where the reporting response message is used to indicate success or failure of capability reporting.

Embodiments of the present application further provide a processor-readable storage medium storing a computer program, where the computer program is used to cause a processor to perform the method for capability registration as described above.

Embodiments of the present application further provide a computer-readable storage medium storing a computer program, where the computer program is used to cause a computer to perform the method for capability registration as described above.

Embodiments of the present application further provide a communication device-readable storage medium storing a computer program, where the computer program is used to cause a communication device to perform the method for capability registration as described above.

Embodiments of the present application further provide a chip product-readable storage medium storing a computer program, where the computer program is used to cause a chip product to perform the method for capability registration as described above.

In the methods and apparatuses for capability registration, and storage media provided in embodiments of the present application, the registration request message for capability registration is transmitted to the network using the UE as a capability node. The registration request message includes one or more pieces of the following information: a registration type; a security parameter; a capability registration identifier; a capability type; a capability reporting identifier; or capability information. Capability registration with UE as the capability node is enabled, thereby achieving capability reporting and updating with minimal network modifications and saving signaling overhead.

### BRIEF DESCRIPTION OF THE DRAWINGS

To illustrate solutions in embodiments of the present application more clearly, the drawings need to be used in the descriptions of the embodiments are briefly described below. The drawings in the following description are some embodiments of the present application, and other drawings may be obtained based on these drawings without any creative work for those skilled in the art.
FIG. 1 is a first schematic flowchart of a method for capability registration according to an embodiment of the present application;
FIG. 2 is a first signaling interaction diagram of a schematic scenario of a method for capability registration according to an embodiment of the present application;
FIG. 3 is a second signaling interaction diagram of a schematic scenario of a method for capability registration according to an embodiment of the present application;
FIG. 4 is a third signaling interaction diagram of a schematic scenario of a method for capability registration according to an embodiment of the present application;
FIG. 5 is a fourth signaling interaction diagram of a schematic scenario of a method for capability registration according to an embodiment of the present application;
FIG. 6 is a fifth signaling interaction diagram of a schematic scenario of a method for capability registration according to an embodiment of the present application;
FIG. 7 is a sixth signaling interaction diagram of a schematic scenario of a method for capability registration according to an embodiment of the present application;
FIG. 8 is a seventh signaling interaction diagram of a schematic scenario of a method for capability registration according to an embodiment of the present application;
FIG. 9 is a second schematic flowchart of a method for capability registration according to an embodiment of the present application;
FIG. 10 is a third schematic flowchart of a method for capability registration according to an embodiment of the present application;
FIG. 11 is a schematic structural diagram of a user equipment (UE) according to an embodiment of the present application;
FIG. 12 is a schematic structural diagram of a network device according to an embodiment of the present application;
FIG. 13 is a schematic structural diagram of a capability management function according to an embodiment of the present application;
FIG. 14 is a first schematic structural diagram of an apparatus for capability registration according to an embodiment of the present application;
FIG. 15 is a second schematic structural diagram of an apparatus for capability registration according to an embodiment of the present application; and
FIG. 16 is a third schematic structural diagram of an apparatus for capability registration according to an embodiment of the present application.

### DETAILED DESCRIPTION

Data carried by a 6G network includes data generated and consumed by users and user equipment (UE) devices, network devices and functions, infrastructure such as cloud platforms, as well as algorithms and applications of the 6G network.

A data plane architecture of the 6G mobile communication network mainly consists of four functions: data organizer (DO) (or data controller (DC)), data agent (DA), trust anchor agent (TAA), and data storage function (DSF). DO supports programmable data pipelines and implements data service request conversion, constructing data pipelines based on data service requests. DA may be built into network functions or UEs, and may also be deployed independently, to perform data collection, data preprocessing, data storage, data analysis, data sharing, and other data services arranged in the data pipeline. DA may implement various data processing functions, which are reported as DA capabilities to DO or DC during DA registration and may be updated in a timely manner.

In the prior art, due to the lack of registration methods for data service capabilities, AI capabilities, network callable capabilities, etc., capabilities cannot be reported, resulting in the inability to provide network services such as services and AI services.

Based on the above problems, the embodiments of the present application provide a method for capability registration. The request message for capability registration is transmitted to the network using the UE as a capability node. The request message includes one or more pieces of the following information: a registration type; a security parameter; a capability registration identifier; a capability type; a capability reporting identifier; or capability information. Capability registration with UE as the capability node is enabled, thereby achieving capability reporting and updating with minimal network modifications and saving signaling overhead.

To clarify the objective, solution, and advantage of the embodiments of the present application, a clear and complete description of the solutions in embodiments of the present application is provided below in conjunction with the accompanying drawings. These embodiments are only a part of the embodiments of the present application, and not all of the embodiments. All other embodiments obtained by those skilled in the art based on embodiments of the present application without any creative work belong to the scope of the present application.

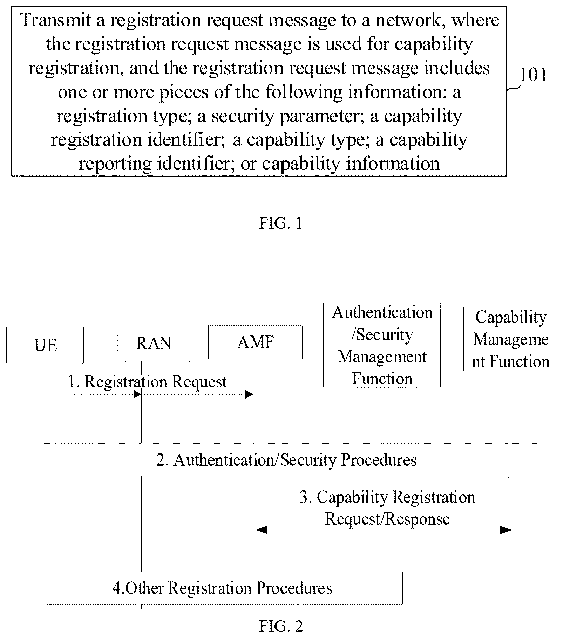

FIG. 1 is a first schematic flowchart of a method for capability registration according to an embodiment of the present application. As shown in FIG. 1, embodiments of the present application provide a method for capability registration, which may be performed by a user equipment (UE), such as a mobile phone, etc. The method includes:
step 101: transmitting a registration request message to a network, where the registration request message is used for capability registration, and the registration request message includes one or more pieces of the following information:
a registration type;
a security parameter;
a capability registration identifier;
a capability type;
a capability reporting identifier; or
capability information.

In an embodiment, the UE acts as a capability node for capability registration, that is, the UE transmits a registration request message to the network device for capability registration; the network device obtains the registration request message transmitted from the UE and performs capability registration based on the information included in the registration request message. The registration request message is a non-access stratum (NAS) message.

In embodiments of the present application, the network device may be a radio access network (RAN), an access and mobility management function (AMF), an authentication/security management function, and/or a capability management function, etc.

In an embodiment, UE may register and report capabilities simultaneously, or the UE may register capabilities first and then report them.

For example, the UE transmits the registration request message to the network device, where the registration request message includes the registration type, the security parameter, the capability registration identifier, the capability type, and the UE identifier. After obtaining the registration request message, the network device transmits the capability registration request message to the corresponding capability management function based on the capability registration identifier and capability type in the registration request message. The capability registration request message carries information such as the capability registration identifier and UE location information. The network device is informed of the successful capability registration based on the fact that the capability registration management network function successfully registers, and the UE obtains the registration response message.

After successful capability registration, the UE transmits the registration request message to the network device, where the registration request message includes the registration type, capability reporting identifier, capability type, capability information, and UE identifier. After obtaining the registration request message, the network device transmits the capability reporting request message to the corresponding capability management function based on the capability reporting identifier and capability type in the registration request message. The capability reporting request message carries information in the registration request message, and UE location information, etc. After successful reporting, the network transmits a registration acceptance message to the UE.

For another example, the UE transmits the registration request message to the network device, where the registration request message includes the registration type, security parameter, capability registration identifier, capability reporting identifier, capability type, capability information, and UE identifier. After obtaining the registration request message, the network device initiates the capability registration request and capability reporting request to the corresponding capability management function based on the capability registration identifier, capability reporting identifier, and capability type in the registration request message. The request message transmitted from the network device to the capability management function carries information such as the capability registration identifier, capability type, capability information, UE location information, etc., and then the network device transmits a response message to the UE to indicate successful capability registration and capability reporting.

In an embodiment, UE may perform both network registration and capability registration simultaneously, or not simultaneously. For example, the UE may perform capability registration simultaneously with network registration, or perform network registration before capability registration, or perform capability registration before network registration.

In the method for capability registration provided in embodiments of the present application, UE is used as the capability node for capability registration and capability reporting. The network registers and reports capabilities simultaneously or sequentially based on the parameter included in the registration request message transmitted from UE, achieving capability registration in network service scenarios such as data services and AI services, and saving signaling overhead.

In some embodiments, the registration type includes an initial registration type and a mobile registration update.

In an embodiment, in case that the UE performs both network registration and capability registration simultaneously, the registration type in the registration request message transmitted to the network is the initial registration type; after the UE has completed network registration and/or capability registration, the registration type included in the registration request message transmitted to the network is mobile registration update, including UE capability update type.

For example, UE performs network registration and reporting simultaneously, and the registration type in the registration request message transmitted to the network is the initial registration type.

For another example, if the UE simultaneously performs network registration and capability registration, the registration type in the registration request message transmitted to the network is the initial registration type; in case that the UE performs capability reporting, the registration type in the registration request message transmitted to the network is UE capability update type.

For another example, if the UE has already registered with the network, the registration type in the registration request message transmitted from the UE to the network during capability registration and capability reporting is either mobile registration update or UE capability update type.

In some embodiments, the security parameter includes capability authentication data.

In some embodiments, the capability registration identifier is used to represent one or more capability registration indications.

In an embodiment, the network device receives the registration request message, and determines the need for capability registration based on the capability registration identifier in the registration request message. In case that there are multiple capability management functions in the network, the capability registration identifier may also be used to determine the capability management function corresponding to the capability registration identifier. The capability of the type corresponding to the capability registration identifier may be successfully registered.

In some embodiments, the capability reporting identifier is used to represent one or more capability reporting indications.

In an embodiment, the network device receives the registration request message, and determines the need for capability reporting based on the capability registration identifier in the registration request message. In case that there are multiple capability management functions in the network, the capability reporting identifier may also be used to determine the capability management function corresponding to the capability reporting identifier. The capability of the type corresponding to the capability reporting identifier may be successfully updated.

In some embodiments, the capability type includes one or more of the following types:
a data node type;
an artificial intelligence (AI) node type;
a callable capability type; or
an open capability type.

In an embodiment, in the procedure of capability registration, the capability type included in the registration request message transmitted from the UE includes: a capability type such as the data node type, AI node type, and/or open capability type. In the procedure of capability reporting, the capability type included in the registration request message transmitted from the UE includes: a capability type such as the data node type, AI node type, and/or callable capability type.

In some embodiments, the capability information includes one or more pieces of the following information:
a data collection capability;
a data preprocessing capability;
a data forwarding capability;
a data storage capability;
a data analysis capability;
a protocol supported by the UE;
an application (APP) supported by the UE;
an artificial intelligence (AI) model supported by the UE; or
an artificial intelligence (AI) algorithm supported by the UE.

In some embodiments, the method further includes:
obtaining a registration response message fed back from the network, where the registration response message is used to indicate success or failure of the capability registration;
   or,
obtaining a reporting response message fed back from the network, where the reporting response message is used to indicate success or failure of capability reporting.

In an embodiment, after transmitting the registration request message to the network, the UE also obtains the registration response message and/or the reporting response message fed back from the network. The registration response message is used to indicate success or failure of the capability registration. The reporting response message is used to indicate success or failure of capability reporting.

For example, the network device such as an AMF transmits a registration request message to the capability management function for capability registration, and then transmits a registration response message to the UE, where the registration response message is used to indicate success or failure of the capability registration. The UE receives the registration response message fed back from the AMF.

For another example, the network device such as an AMF transmits a reporting request message to the capability management function for capability registration, and then transmits a reporting response message to the UE. The reporting response message is used to indicate success or failure of the capability reporting. The UE receives the reporting response message fed back from the AMF.

For another example, the capability management function receives a registration request message transmitted from the network device, performs capability registration based on the information included therein, and transmits a registration response message to the UE to indicate success or failure of the capability registration. The UE receives the registration response message.

For another example, the capability management function receives a reporting request message transmitted from the network device, performs capability reporting based on the information included therein, and transmits a reporting response message to the UE to indicate success or failure of the capability reporting. The UE receives the reporting response message.

For another example, the capability management function receives a registration request message transmitted from the network device, performs capability registration based on the information included therein, and transmits a registration response message to the network device such as an AMF. The AMF then transmits the registration response message to the UE to indicate success or failure of the capability registration. The UE receives the registration response message.

For another example, the capability management function receives a reporting request message transmitted from the network device, performs capability reporting based on the information included therein, and transmits a reporting response message to the network device such as AMF. The AMF then transmits the reporting response message to the UE to indicate success or failure of the capability reporting. The UE receives the reporting response message.

In the method for capability registration provided in embodiments of the present application, success or failure of capability registration is determined through the registration response message fed back from the network, and success or failure of the capability reporting is determined through the reporting response message fed back from the network, achieving capability registration and capability reporting with UE as the capability node.

In some embodiments, transmitting the registration request message to the network includes:
in case that there is only one capability management function in a network, transmitting the registration request message to the capability management function.

In an embodiment, in case that there is only one capability management function in the network, the UE transmits a registration request message to the capability management function.

In some embodiments, in case that there is only one capability management function in the network, the UE transmits a registration request message to the network device such as a RAN or an AMF, and then the network device transmits a registration request message and/or a reporting request message to the capability management function based on the information included in the registration request message.

In some embodiments, the registration request message transmitted to the capability management function includes one or more pieces of the following information: an authentication/security result, capability registration identifier, or UE location information.

In some embodiments, the reporting request message transmitted to the capability management function includes one or more pieces of the following information: an authentication/security result, capability reporting identifier, or UE location information.

For example, in case that there is only one capability management function in the network, the UE transmits a registration request message to the network device, where the registration request message includes the capability registration identifier. The network device transmits a registration request message to the capability management function based on the capability registration identifier, where the registration request message includes an authentication/security result, capability registration identifier, and/or UE location information.

For another example, in case that there is only one capability management function in the network, the UE transmits a registration request message to the network device, where the registration request message includes the capability reporting identifier. The network device transmits a reporting request message to the capability management function based on the capability report identifier, where the reporting request message includes an authentication/security result, capability report identifier, and/or UE location information.

For another example, in case that there is only one capability management function in the network, the UE transmits a registration request message to the network device, where the registration request message includes the capability registration identifier and capability reporting identifier. The network device transmits a registration and reporting request message to the capability management function based on the capability registration identifier and capability reporting identifier. The registration request message transmitted to the capability management function includes an authentication/security result, capability registration identifier, capability reporting identifier, and/or UE location information.

In some embodiments, transmitting the registration request message to the network includes:
in case that there are multiple capability management functions in a network, transmitting the registration request message to a capability management function corresponding to the capability registration identifier.

In an embodiment, in case that there are multiple capability management functions in the network, the UE transmits a registration request message to the capability management function corresponding to the capability registration identifier.

In some embodiments, in case that there are multiple capability management functions in the network, the UE transmits a registration request message to the network device such as a RAN or an AMF, and then the network device determines a corresponding capability management function based on the capability registration identifier (and/or capability type) included in the registration request message, that is, determines a capability management function that may register the capability type indicated by the capability registration identifier (and/or capability type), and transmits a registration request message to the capability management function.

In an embodiment, during capability reporting or simultaneous capability registration and capability reporting, since the registration request message includes the capability reporting identifier, the UE may also transmit a registration request message and/or a reporting request message to the capability management function corresponding to the capability reporting identifier.

For example, in case that there are multiple capability management functions in the network, the UE transmits a registration request message to the network device, where the registration request message includes the capability registration identifier. The network device determines the need for capability registration based on the capability registration identifier, and transmits a registration request message to the capability management function corresponding to the capability registration identifier. The registration request message transmitted to the capability management function includes an authentication/security result, capability registration identifier, and/or UE location information.

For another example, in case that there are multiple capability management functions in the network, the UE transmits a registration request message to the network device, where the registration request message includes the capability reporting identifier. The network device determines the need for capability reporting based on the capability reporting identifier, and transmits a reporting request message to the capability management function corresponding to the capability reporting identifier. The reporting request message transmitted to the capability management function includes an authentication/security result, capability reporting identifier, and/or UE location information.

For another example, in case that there are multiple capability management functions in the network, the UE transmits a registration request message to the network device, where the registration request message includes the capability registration identifier and capability reporting identifier. The network device determines the need for capability registration and capability reporting based on the capability registration identifier and capability reporting identifier, and transmits a registration (and reporting) request message to the capability management function corresponding to the capability registration identifier. The registration request message transmitted to the capability management function includes an authentication/security result, capability registration identifier, capability reporting identifier, and/or UE location information.

In the method for capability registration provided in embodiments of the present application, the corresponding capability management function is determined based on the capability registration identifier, enabling quick completion of capability registration based on the capability management function and improving the efficiency of capability registration.

In some embodiments, after obtaining the registration request message transmitted from the UE, the network device further performs UE capability authentication and/or security procedure based on the capability registration identifier and capability type included in the registration request message.

In an embodiment, after receiving the registration request message, the network device needs to first perform capability authentication and/or security procedure on the UE. After successful authentication, the network performs capability registration based on the information included in the registration request message.

For example, the UE transmits the registration request message to the network device, where the registration request message includes the registration type, the security parameter, the capability registration identifier, the capability type, and the UE identifier. The network device performs UE capability authentication and/or security procedure based on the capability registration identifier and capability type. After successful authentication, the network device transmits an authentication/security result, capability registration identifier, and UE location information to the capability management function for capability registration. In case of initiating a capability reporting request after registration is completed, since the capability authentication and/or security procedure has already been passed before the capability registration, there is no need to perform capability authentication and/or security procedure on the UE. The network device directly completes the capability reporting based on the capability reporting identifier and capability type in the registration request message transmitted from the UE.

For another example, the UE transmits the registration request message to the network device, where the registration request message includes the registration type, security parameter, capability registration identifier, capability reporting identifier, capability type, capability information, and UE identifier. The network device performs UE capability authentication and/or security procedure based on the capability registration identifier and capability type. After successful authentication, the network device transmits an authentication/security result, capability registration identifier, capability reporting identifier, capability type, capability information, and UE location information to the capability management function for capability registration and capability reporting.

In some embodiments, in case that the UE has already registered with the network, the network device may perform capability authentication/security procedure on the UE based on the capability registration identifier and capability type after receiving the registration request message transmitted from the UE; the network device may also transmit the registration request message of the UE to the corresponding capability management function based on the capability registration identifier and capability type. The capability management function then performs the UE authentication.

For example, the UE has already registered with the network, in case that the UE initiates a registration request, the AMF receives the registration request message transmitted from the UE, and performs capability authentication/security procedure on the UE based on the capability registration identifier and capability type included therein.

For another example, the UE has already registered with the network, in case that the UE initiates a registration request, the AMF receives the registration request message transmitted from the UE and transmits the registration request message to the corresponding capability management function based on the capability registration identifier and capability type in the registration request message. The capability management function then performs capability authentication/security procedure on the UE.

In the method for capability registration provided in embodiments of the present application, the network device further performs UE capability authentication and/or security procedure based on the capability registration identifier and capability type, enabling authorization of legitimate UE and providing assurance for capability registration and capability reporting. In case that the UE has registered with the network, the UE capability authentication may be performed by the AMF or by the capability management function, and may be flexibly applied according to actual needs.

Below are specific examples to further illustrate the method for capability registration provided in the above embodiments.

### Example I

UE performs network registration while capability registration, and performs capability reporting after completing capability registration.

FIG. 2 is a first signaling interaction diagram of a schematic scenario of a method for capability registration according to an embodiment of the present application. As shown in FIG. 2, the UE first performs capability registration, and the steps of the capability registration are as follows.

Step 1: UE initiates a registration request, and the registration request message (NAS message) includes a registration type, UE identifier, security parameter, capability registration identifier, and capability type, etc. The security parameter may include capability authentication data; the capability registration identifier refers to a capability registration indication of a certain/multiple types; the capability type refers to a specific capability type to be registered, such as a data node type, AI node type, and open capability type, etc.; the registration type refers to an initial registration type.

Step 2: after receiving the registration request from the UE, the network performs UE authentication/security procedure, which also includes authentication/security procedure of UE capabilities based on the capability registration identifier and capability type.

Step 3: after successful authentication, the network requests capability registration to the corresponding capability management function based on the capability registration identifier and capability type. The request message carries an authentication/security result, capability registration identifier, UE location information, and other information. There may be multiple different capability management functions or only one comprehensive capability management function in the network. In case that there are multiple different capability management functions, the AMF transmits capability registration requests to the corresponding capability management functions based on the capability registration identifier respectively. A response message is transmitted after successful registration.

Step 4: the network performs other registration procedures.

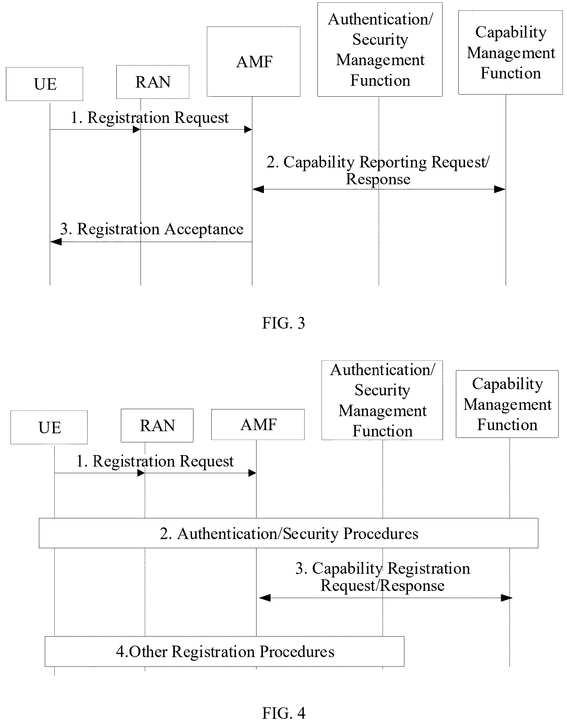

FIG. 3 is a second signaling interaction diagram of a schematic scenario of a method for capability registration according to an embodiment of the present application. As shown in FIG. 3, the steps for the UE to report capabilities after the above capability registration procedures are as follows.

Step 1: UE initiates a registration request, and the registration request message (NAS message) includes a registration type, UE identifier, capability reporting identifier, capability type, and capability information, etc. The capability reporting identifier refers to a capability reporting indication of a certain/multiple types; the capability type refers to a capability to be reported, such as a data node type, and callable capability type; the capability information refers to a specific capability, including data service capabilities such as data collection, data preprocessing, data forwarding, data storage, data analysis, etc., as well as callable capabilities such as supported protocols, supported applications (APPs), supported AI models or algorithms, etc.; the registration type refers to mobile registration update (UE capability update type).

Step 2: after receiving the registration request from the UE, the network transmits a capability reporting request to the corresponding capability management function based on the capability reporting identifier and capability type. The request message carries the information in the registration request, as well as the UE location information. If there are multiple different capability management functions in the network, the AMF transmits capability reporting requests to the corresponding capability management functions based on the capability reporting identifier and capability type respectively. After successful reporting, a response message is transmitted.

Step 3: after successful capability reporting, the network transmits a registration acceptance message to the UE.

### Example II

FIG. 4 is a third signaling interaction diagram of a schematic scenario of a method for capability registration according to an embodiment of the present application. As shown in FIG. 4, UE performs network registration while capability registration, and registration and capability reporting are performed simultaneously.

Step 1: UE initiates a registration request, and the registration request message (NAS message) includes a registration type, UE identifier, security parameter, capability registration identifier, capability reporting identifier, capability type, and capability information, etc. The security parameter may include capability authentication data, and the capability reporting identifier refers to a capability reporting indication of a certain/multiple types; the capability type refers to a capability to be reported, such as a data node type, and callable capability type, etc.; the capability information refers to a specific capability, including data service capabilities such as data collection, data preprocessing, data forwarding, data storage, data analysis, etc., as well as callable capabilities such as supported protocols, supported APPs, supported AI models or algorithms, etc.; the registration type refers to initial registration type.

Step 2: after receiving the registration request from the UE, the network performs UE authentication/security procedure, which also includes authentication/security procedure of UE capabilities based on the capability registration identifier and capability type.

Step 3: after successful authentication, the network requests capability registration and capability reporting to the corresponding capability management function based on the capability registration identifier and capability type. The request message carries an authentication/security result, capability registration identifier, capability reporting identifier, capability type, capability information, UE location information, and other information. If there are multiple different capability management functions in the network, the AMF transmits capability registration requests to the corresponding capability management functions based on the capability registration identifier. A response message is transmitted after successful registration.

Step 4: the network performs other registration procedures.

### Example III

After registering with the network, UE performs capability registration and capability reporting respectively.

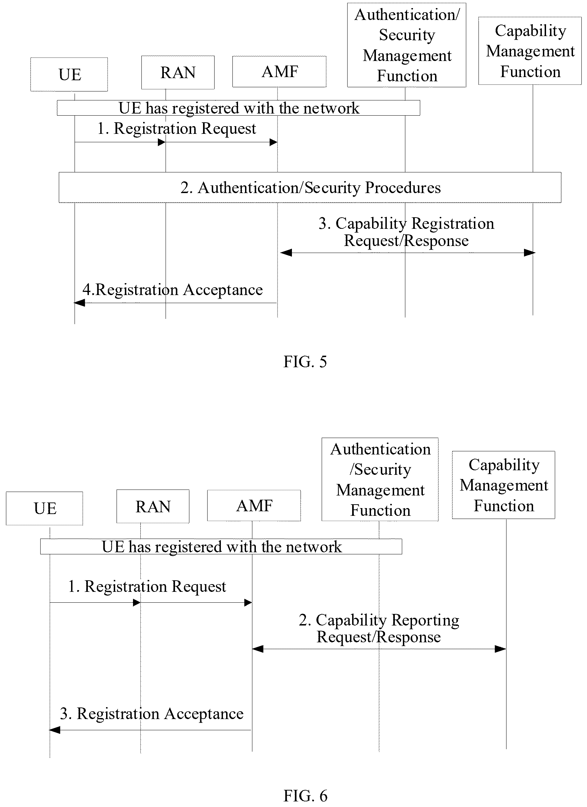

FIG. 5 is a fourth signaling interaction diagram of a schematic scenario of a method for capability registration according to an embodiment of the present application. As shown in FIG. 5, in case that the UE has already registered with the network, steps for the UE to perform capability registration are as follows.

Step 1: UE initiates a registration request, and the registration request message (NAS message) includes a registration type, UE identifier, security parameter, capability registration identifier, and capability type, etc. The security parameter includes capability authentication data, and the capability reporting identifier refers to a capability reporting indication of a certain/multiple types; the capability type refers to a capability to be reported, such as a data node type, and callable capability type, etc.; the registration type refers to mobile registration update (UE capability update type).

Step 2: an AMF performs an authentication/security procedure of UE capabilities based on the capability registration identifier and capability type. Alternatively, the AMF transmits the registration request message of the UE to the corresponding capability management function based on the capability registration identifier and capability type, and the capability management function performs the UE authentication procedure.

Step 3: after successful authentication, the network requests capability registration to the corresponding capability management function based on the capability registration identifier and capability type. The request message carries an authentication/security result, capability registration identifier, UE location information, and other information. If there are multiple different capability management functions in the network, the AMF transmits capability registration requests to the corresponding capability management functions based on the capability registration identifier. A response message is transmitted after successful registration.

Step 4: the network performs other registration procedures.

FIG. 6 is a fifth signaling interaction diagram of a schematic scenario of a method for capability registration according to an embodiment of the present application. As shown in FIG. 6, after the capability registration is completed, capability reporting may be performed. Steps for capability reporting are as follows.

Step 1: UE initiates a registration request, and the registration request message (NAS message) includes a registration type, UE identifier, capability reporting identifier, capability type, and capability information, etc. The capability reporting identifier refers to a capability reporting indication of a certain/multiple types; the capability type refers to a capability to be reported, such as a data node type, and callable capability type, etc.; the capability information refers to a specific capability, including data service capabilities such as data collection, data preprocessing, data forwarding, data storage, data analysis, etc., as well as callable capabilities such as supported protocols, supported APPs, supported AI models or algorithms, etc.; the registration type refers to mobile registration update (UE capability update type).

Step 2: after receiving the registration request from the UE, the network transmits a capability reporting request to the corresponding capability management function based on the capability reporting identifier and capability type. The request message carries the information in the registration request, as well as the UE location information. If there are multiple different capability management functions in the network, the AMF transmits capability reporting requests to the corresponding capability management functions based on the capability reporting identifier and capability type. After successful reporting, a response message is transmitted.

Step 3: after successful capability reporting, the network transmits a registration acceptance message to the UE.

### Example IV

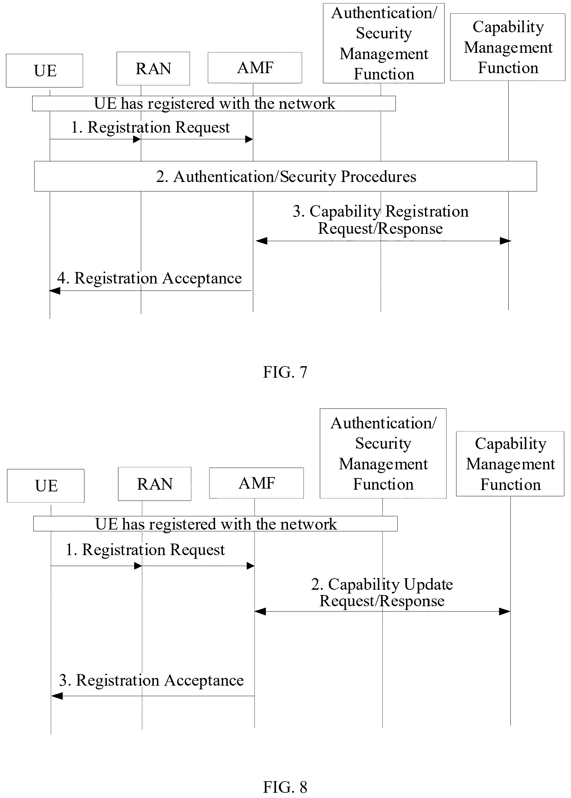

FIG. 7 is a sixth signaling interaction diagram of a schematic scenario of a method for capability registration according to an embodiment of the present application. As shown in FIG. 7, the UE has already registered with the network, and steps for UE to register and report capabilities together are as follows.

Step 1: UE initiates a registration request, and the registration request message (NAS message) includes a registration type, UE identifier, security parameter, capability registration identifier, capability reporting identifier, capability type, and capability information, etc. The security parameter includes capability authentication data, and the capability reporting identifier refers to a capability reporting indication of a certain/multiple types; the capability type refers to a capability to be reported, such as a data node type, and callable capability type, etc.; the capability information refers to a specific capability, including data service capabilities such as data collection, data preprocessing, data forwarding, data storage, data analysis, etc., as well as callable capabilities such as supported protocols, supported APPs, supported AI models or algorithms, etc.; the registration type refers to mobile registration update (UE capability update type).

Step 2: an AMF performs an authentication/security procedure of UE capabilities based on the capability registration identifier and capability type. Alternatively, the AMF transmits the registration request message of the UE to the corresponding capability management function based on the capability registration identifier and capability type, and the capability management function performs the UE authentication procedure.

Step 3: after successful authentication, the network requests capability registration and capability reporting to the corresponding capability management function based on the capability registration identifier and capability type. The request message carries an authentication/security result, capability registration identifier, capability reporting identifier, capability type, capability information, UE location information, and other information. If there are multiple different capability management functions in the network, the AMF transmits capability registration requests to the corresponding capability management function based on the capability registration identifier. A response message is transmitted after successful registration.

Step 4: the network performs other registration procedures.

### Example V

FIG. 8 is a seventh signaling interaction diagram of a schematic scenario of a method for capability registration according to an embodiment of the present application. As shown in FIG. 8, in case that the UE has already registered with the network, the procedure of capability update is similar to the procedure of capability reporting by the UE. Steps for UE to update capabilities are as follows.

Step 1: UE initiates a registration request, and the registration request message (NAS message) includes a registration type, UE identifier, capability reporting identifier, capability type, and capability information, etc. The capability reporting identifier refers to a capability reporting indication of a certain/multiple types; the capability type refers to a capability to be reported, such as a data node type, and callable capability type, etc.; the capability information refers to a specific capability, including data service capabilities such as data collection, data preprocessing, data forwarding, data storage, data analysis, etc., as well as callable capabilities such as supported protocols, supported APPs, supported AI models or algorithms, etc.; the registration type refers to mobile registration update (UE capability update type).

Step 2: after receiving the registration request from the UE, the network performs a capability update request to the corresponding capability management function based on the capability reporting identifier and capability type. The request message carries the information in the registration request, as well as the UE location information. Here, there may be multiple different capability management functions or a comprehensive capability management function in the network. If there are multiple different capability management functions, the AMF transmits capability reporting requests to the corresponding capability management functions based on the capability reporting identifier and capability type. After successful reporting, a response message is transmitted.

Step 3: after the capability update is successful, the network transmits a registration acceptance message to the UE.

In the method for capability registration provided in embodiments of the present application, the registration request message for capability registration is transmitted to the network using the UE as a capability node. The registration request message includes one or more pieces of the following information: a registration type; a security parameter; a capability registration identifier; a capability type; a capability reporting identifier; or capability information. Capability registration with UE as the capability node is enabled, thereby achieving capability reporting and updating with minimal network modifications and saving signaling overhead.

In some embodiments, if the RAN may directly interact with the authentication function and capability management function, in case that the UE needs to perform capability registration and capability reporting, the relevant parameters of capability registration and capability reporting may be placed in RAN parameters, and the RAN may register, authenticate, and report to the capability management function.

In some embodiments, in case that the registration request message is also used for network registration, the network device also needs to perform UE network authentication and/or security procedure.

In an embodiment, in case that network registration and capability registration are performed simultaneously, after receiving the registration request message transmitted from the UE, the network device not only needs to perform the capability authentication and/or security procedure of the UE, but also needs to perform the network authentication and/or security procedure of the UE.

In some embodiments, during the capability registration and capability reporting procedure, if the UE has already performed authentication/security procedure when registering with the network and the authentication is successful, then there is no need to perform authentication/security procedure for relevant capabilities of the UE.

Alternatively, in case that the UE needs to register with the network and also perform capability registration, it may only perform authentication/security procedure for whether the UE may register with the network.

In the method for capability registration provided in embodiments of the present application, the need for capability authentication and/or security procedure for UE that has already registered on the network is eliminated, simplifying the signaling procedure, and improving the efficiency of capability registration and capability reporting.

In some embodiments, if the UE has successfully registered with the network and does not need the capability authentication/security procedure, then the RAN may directly access the capability management function. In case that the UE needs to perform capability registration and capability reporting, the relevant parameters of capability registration and capability reporting may be placed in RAN parameters, and the RAN may register, authenticate, and report to the capability management function.

In the method for capability registration provided in embodiments of the present application, in case that the authentication/security function directly interacts with the management function, the RAN transmits a registration request message to the capability management function for capability registration, etc. Based on the original network architecture, multiple ways for network devices to perform capability registration are provided, which may be flexibly applied to various scenarios.

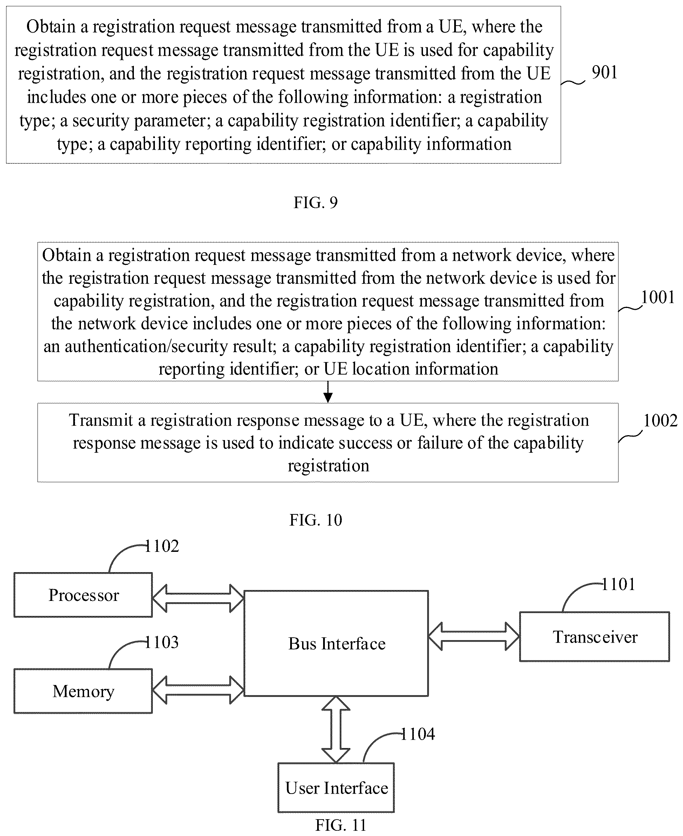

FIG. 9 is a second schematic flowchart of a method for capability registration according to an embodiment of the present application. As shown in FIG. 9, embodiments of the present application provide a method for capability registration, which may be performed by a network device such as a radio access network (RAN), an access and mobility management function (AMF), an authentication/security management function, and/or a capability management function. The method includes:
step 901: obtaining a registration request message transmitted from a UE, where the registration request message transmitted from the UE is used for capability registration, and the registration request message transmitted from the UE includes one or more pieces of the following information:
a registration type;
a security parameter;
a capability registration identifier;
a capability type;
a capability reporting identifier; or
capability information.

In some embodiments, the method further includes:
performing UE capability authentication and/or security procedure based on the capability registration identifier and the capability type.

In some embodiments, the method further includes:
transmitting the registration request message to a capability management function, where the registration request message transmitted to the capability management function includes one or more pieces of the following information:
an authentication/security result;
a capability registration identifier;
UE location information.

In some embodiments, transmitting the registration request message to the capability management function includes:
in case that there is only one capability management function in a network, transmitting the registration request message to the capability management function.

In some embodiments, transmitting the registration request message to the capability management function includes:
in case that there are multiple capability management functions in a network, transmitting the registration request message to a capability management function corresponding to the capability registration identifier.

In some embodiments, the method further includes:
transmitting a reporting request message to a capability management function, where the reporting request message includes one or more pieces of the following information:
an authentication/security result;
a capability reporting identifier; or
UE location information.

In some embodiments, transmitting the reporting request message to the capability management function includes:
in case that there is only one capability management function in a network, transmitting the reporting request message to the capability management function.

In some embodiments, transmitting the reporting request message to the capability management function includes:
in case that there are multiple capability management functions in a network, transmitting the reporting request message to a capability management function corresponding to the capability reporting identifier.

In some embodiments, the method further includes:
transmitting a registration response message to the UE, where the registration response message is used to indicate success or failure of the capability registration;
   or,
transmitting a reporting response message to the UE, where the reporting response message is used to indicate success or failure of capability reporting.

In some embodiments, in case that the registration request message is further used for network registration, the method further includes:
performing UE network authentication and/or security procedure.

In an embodiment, the method for capability registration provided in embodiments of the present application may refer to the above embodiment of the method for capability registration with the executing subject being the UE, and may achieve the same technical effect. Therefore, the same parts and beneficial effects as the corresponding method embodiments in this embodiment will not be described here.

FIG. 10 is a third schematic flowchart of a method for capability registration according to an embodiment of the present application. As shown in FIG. 10, embodiments of the present application provide a method for capability registration, which may be performed by a capability management function. The method includes:
step 1001: obtaining a registration request message transmitted from a network device, where the registration request message transmitted from the network device is used for capability registration, and the registration request message transmitted from the network device includes one or more pieces of the following information:
an authentication/security result;
a capability registration identifier;
a capability reporting identifier; or
user equipment (UE) location information;
transmitting a registration response message to a UE, where the registration response message is used to indicate success or failure of the capability registration.

In some embodiments, the method further includes:
transmitting a reporting response message to the UE, where the reporting response message is used to indicate success or failure of capability reporting.

In an embodiment, the method for capability registration provided in embodiments of the present application may refer to the above embodiment of the method for capability registration with the executing subject being the UE, and may achieve the same technical effect. Therefore, the same parts and beneficial effects as the corresponding method embodiments in this embodiment will not be described here.

FIG. 11 is a schematic structural diagram of a UE according to an embodiment of the present application. As shown in FIG. 11, the UE includes a memory 1103, a transceiver 1101, and a processor 1102, where
the memory 1103 is used for storing a computer program, and the transceiver 1101 is used for receiving and transmitting data under control of the processor 1102; the processor 1102 is used for reading the computer program in the memory 1103 and perform the following operations:
transmitting a registration request message to a network, where the registration request message is used for capability registration, and the registration request message includes one or more pieces of the following information:
a registration type;
a security parameter;
a capability registration identifier;
a capability type;
a capability reporting identifier; or
capability information.

In an embodiment, the transceiver 1101 is used to receive and transmit data under control of the processor 1102.

In FIG. 11, a bus architecture may include any number of interconnected buses and bridges, which are linked together through various circuits of one or more processors represented by the processor 1102 and one or more memories represented by the memory 1103. The bus architecture may also link together various other circuits, such as peripherals, voltage regulators, and power management circuits, which are well known in the art, and therefore will not be further described in the present application. The bus interface provides an interface. The transceiver 1101 may include multiple elements, i.e., a transmitter and a receiver, units for providing communication with various other devices over transmission media including wireless channels, wired channels, fiber optic cables, and the like. For different user equipment, a user interface 1104 may be an interface capable of externally or internally connecting the required device, and the connected device includes, but not limited to, a keypad, a display, a speaker, a microphone, a joystick, and the like.

The processor 1102 is responsible for managing the bus architecture and general processing, and the memory 1103 may store data used by the processor 1102 when performing operations.

In some embodiments, the processor 1102 may be a central processing unit (CPU), an application specific integrated circuit (ASIC), a field-programmable gate array (FPGA), or a complex programmable logic device (CPLD). The processor may also use a multi-core architecture.

The processor calls the computer program stored in the memory to execute any of the methods provided in embodiments of the present application according to the obtained executable instructions. The processor and the memory may also be arranged physically separately.

In some embodiments, the processor is further used for reading the computer program in the memory and perform the following operations:
obtaining a registration response message fed back from the network, where the registration response message is used to indicate success or failure of the capability registration;
   or,
obtaining a reporting response message fed back from the network, where the reporting response message is used to indicate success or failure of capability reporting.

In some embodiments, transmitting the registration request message to the network includes:
in case that there is only one capability management function in a network, transmitting the registration request message to the capability management function.

In some embodiments, transmitting the registration request message to the network includes:
in case that there are multiple capability management functions in a network, transmitting the registration request message to a capability management function corresponding to the capability registration identifier.

In some embodiments, the registration type includes an initial registration type and a mobile registration update.

In some embodiments, the security parameter includes capability authentication data.

In some embodiments, the capability registration identifier is used to represent one or more capability registration indications.

In some embodiments, the capability reporting identifier is used to represent one or more capability reporting indications.

In some embodiments, the capability type includes one or more of the following types:
a data node type;
an artificial intelligence (AI) node type;
a callable capability type; or
an open capability type.

In some embodiments, the capability information includes one or more pieces of the following information:
a data collection capability;
a data preprocessing capability;
a data forwarding capability;
a data storage capability;
a data analysis capability;
a protocol supported by the UE;
an application (APP) supported by the UE;
an artificial intelligence (AI) model supported by the UE; or
an artificial intelligence (AI) algorithm supported by the UE.

It should be noted that the UE provided in embodiments of the present application may implement all the method steps implemented by the method embodiment with the UE as the executing subject, and may achieve the same technical effects. Therefore, the same parts and beneficial effects as the method embodiment in this embodiment will not be described here.

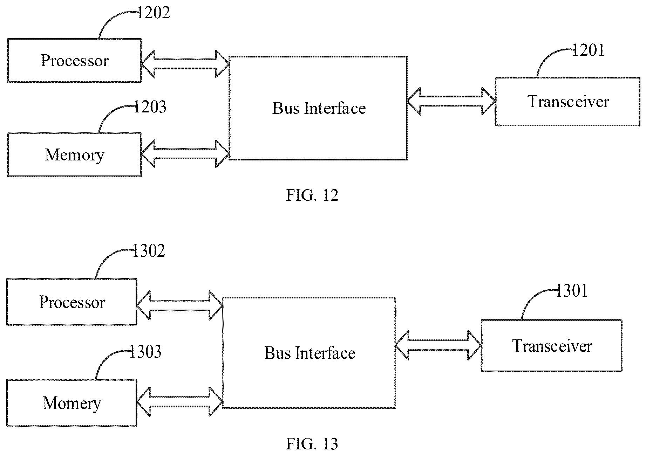

FIG. 12 is a schematic structural diagram of a network device according to an embodiment of the present application. As shown in FIG. 12, the network device includes a memory 1203, a transceiver 1201, and a processor 1202, where
the memory 1203 is used for storing a computer program, and the transceiver 1201 is used for receiving and transmitting data under control of the processor 1202; the processor 1202 is used for reading the computer program in the memory 1203 and perform the following operations:
obtaining a registration request message transmitted from a UE, where the registration request message transmitted from the UE is used for capability registration, and the registration request message transmitted from the UE includes one or more pieces of the following information:
a registration type;
a security parameter;
a capability registration identifier;
a capability type;
a capability reporting identifier; or
capability information.

In an embodiment, the transceiver 1201 is used to receive and transmit data under control of the processor 1202.

In FIG. 12, a bus architecture may include any number of interconnected buses and bridges, which are linked together through various circuits of one or more processors represented by the processor 1202 and one or more memories represented by the memory 1203. The bus architecture may also link together various other circuits, such as peripherals, voltage regulators, and power management circuits, which are well known in the art, and therefore will not be further described in the present application. The bus interface provides an interface. The transceiver 1201 may include multiple elements, i.e., a transmitter and a receiver, units for providing communication with various other devices over transmission media including wireless channels, wired channels, fiber optic cables, and the like. The processor 1202 is responsible for managing the bus architecture and general processing, and the memory 1203 may store data used by the processor 1202 when performing operations.

The processor 1202 may be a central processing unit (CPU), an application specific integrated circuit (ASIC), a field-programmable gate array (FPGA), or a complex programmable logic device (CPLD). The processor may also use a multi-core architecture.

In some embodiments, the processor is further used for reading the computer program in the memory and perform the following operations:
performing UE capability authentication and/or security procedure based on the capability registration identifier and the capability type.

In some embodiments, the processor is further used for reading the computer program in the memory and performing the following operations:
transmitting the registration request message to a capability management function, where the registration request message transmitted to the capability management function includes one or more pieces of the following information:
an authentication/security result;
a capability registration identifier;
UE location information.

In some embodiments, transmitting the registration request message to the capability management function includes:
in case that there is only one capability management function in a network, transmitting the registration request message to the capability management function.

In some embodiments, transmitting the registration request message to the capability management function includes:
in case that there are multiple capability management functions in a network, transmitting the registration request message to a capability management function corresponding to the capability registration identifier.

In some embodiments, the processor is further used for reading the computer program in the memory and performing the following operations:
transmitting a reporting request message to a capability management function, where the reporting request message includes one or more pieces of the following information:
an authentication/security result;
a capability reporting identifier; or
UE location information.

In some embodiments, transmitting the reporting request message to the capability management function includes:
in case that there is only one capability management function in a network, transmitting the reporting request message to the capability management function.

In some embodiments, transmitting the reporting request message to the capability management function includes:
in case that there are multiple capability management functions in a network, transmitting the reporting request message to a capability management function corresponding to the capability reporting identifier.

In some embodiments, the processor is further used for reading the computer program in the memory and performing the following operations:
transmitting a registration response message to the UE, where the registration response message is used to indicate success or failure of the capability registration;
   or,
transmitting a reporting response message to the UE, where the reporting response message is used to indicate success or failure of capability reporting.

In some embodiments, in case that the registration request message is further used for network registration, the processor is further used for reading the computer program in the memory and performing the following operations:
performing UE network authentication and/or security procedure.

In an embodiment, the network device provided in embodiments of the present application may implement all the method steps implemented by the method embodiment with the network device as the executing subject, and may achieve the same technical effects. Therefore, the same parts and beneficial effects as the method embodiment in this embodiment will not be described here.

FIG. 13 is a schematic structural diagram of a capability management function according to an embodiment of the present application. As shown in FIG. 13, the capability management function includes a memory 1303, a transceiver 1301, and a processor 1302, where
the memory 1303 is used for storing a computer program, and the transceiver 1301 is used for receiving and transmitting data under control of the processor 1302; the processor 1302 is used for reading the computer program in the memory 1303 and perform the following operations:
obtaining a registration request message transmitted from a network device, where the registration request message transmitted from the network device is used for capability registration, and the registration request message transmitted from the network device includes one or more pieces of the following information:
an authentication/security result;
a capability registration identifier;
a capability reporting identifier; or
UE location information;
transmitting a registration response message to a UE, where the registration response message is used to indicate success or failure of the capability registration.

In an embodiment, the transceiver 1301 is used to receive and transmit data under control of the processor 1302.

In FIG. 13, a bus architecture may include any number of interconnected buses and bridges, which are linked together through various circuits of one or more processors represented by the processor 1302 and one or more memories represented by the memory 1303. The bus architecture may also link together various other circuits, such as peripherals, voltage regulators, and power management circuits, which are well known in the art, and therefore will not be further described in the present application. The bus interface provides an interface. The transceiver 1301 may include multiple elements, i.e., a transmitter and a receiver, units for providing communication with various other devices over transmission media including wireless channels, wired channels, fiber optic cables, and the like. The processor 1302 is responsible for managing the bus architecture and general processing, and the memory 1303 may store data used by the processor 1302 when performing operations.

The processor 1302 may be a central processing unit (CPU), an application specific integrated circuit (ASIC), a field-programmable gate array (FPGA), or a complex programmable logic device (CPLD). The processor may also use a multi-core architecture.

In some embodiments, the processor is used for reading the computer program in the memory and performing the following operations:
transmitting a reporting response message to the UE, where the reporting response message is used to indicate success or failure of capability reporting.

In an embodiment, the capability management function provided in embodiments of the present application may implement all the method steps implemented by the method embodiment with the capability management function as the executing subject, and may achieve the same technical effects. Therefore, the same parts and beneficial effects as the method embodiment in this embodiment will not be described here.

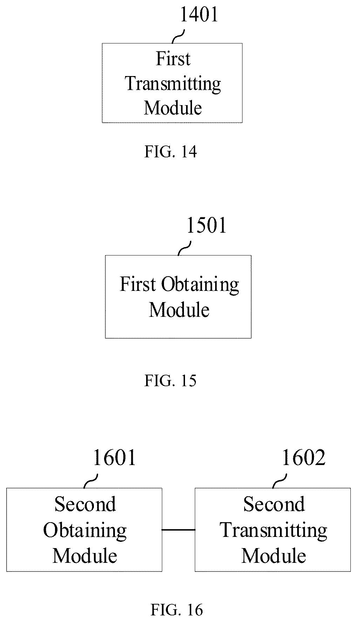

FIG. 14 is a first schematic structural diagram of an apparatus for capability registration according to an embodiment of the present application. As shown in FIG. 14, embodiments of the present application provide an apparatus for capability registration, including a first transmitting module 1401, where
the first transmitting module 1401 is used for transmitting a registration request message to a network, where the registration request message is used for capability registration, and the registration request message includes one or more pieces of the following information:
a registration type;
a security parameter;
a capability registration identifier;
a capability type;
a capability reporting identifier; or
capability information.

In some embodiments, the apparatus further includes:
a third obtaining module, used for obtaining a registration response message fed back from the network, where the registration response message is used to indicate success or failure of the capability registration;
   or,
a fourth obtaining module, used for obtaining a reporting response message fed back from the network, where the reporting response message is used to indicate success or failure of capability reporting.

In some embodiments, the first transmitting module includes:
a first transmitting unit, used for transmitting, in case that there is only one capability management function in a network, the registration request message to the capability management function.

In some embodiments, the first transmitting module includes:
a second transmitting unit, used for transmitting, in case that there are multiple capability management functions in the network, the registration request message to a capability management function corresponding to the capability registration identifier.

In some embodiments, the registration type includes an initial registration type and a mobile registration update.

In some embodiments, the security parameter includes capability authentication data.

In some embodiments, the capability registration identifier is used to represent one or more capability registration indications.

In some embodiments, the capability reporting identifier is used to represent one or more capability reporting indications.

In some embodiments, the capability type includes one or more of the following types:
a data node type;
an artificial intelligence (AI) node type;
a callable capability type; or
an open capability type.

In some embodiments, the capability information includes one or more pieces of the following information:
a data collection capability;
a data preprocessing capability;
a data forwarding capability;
a data storage capability;
a data analysis capability;
a protocol supported by the UE;
an application (APP) supported by the UE;
an artificial intelligence (AI) model supported by the UE; or
an artificial intelligence (AI) algorithm supported by the UE.

In an embodiment, the apparatus for capability registration provided in embodiments of the present application may implement all the method steps implemented by the method embodiment with the UE as the executing subject, and may achieve the same technical effects. Therefore, the same parts and beneficial effects as the method embodiment in this embodiment will not be described here.

FIG. 15 is a second schematic structural diagram of an apparatus for capability registration according to an embodiment of the present application. As shown in FIG. 15, embodiments of the present application provide an apparatus for capability registration, including a first obtaining module 1501.

The first obtaining module 1501 is used for obtaining a registration request message transmitted from a UE, where the registration request message transmitted from the UE is used for capability registration, and the registration request message transmitted from the UE includes one or more pieces of the following information:
a registration type;
a security parameter;
a capability registration identifier;
a capability type;
a capability reporting identifier; or
capability information.

In some embodiments, the apparatus further includes:
a first performing module, used for performing UE capability authentication and/or security procedure based on the capability registration identifier and the capability type.

In some embodiments, the apparatus further includes:
a third transmitting module, used for transmitting the registration request message to a capability management function, where the registration request message transmitted to the capability management function includes one or more pieces of the following information:
an authentication/security result;
a capability registration identifier;
UE location information.

In some embodiments, the first obtaining module includes:
a third transmitting unit, used for transmitting, in case that there is only one capability management function in a network, the registration request message to the capability management function.

In some embodiments, the first obtaining module includes:
a fourth transmitting unit, used for transmitting, in case that there are multiple capability management functions in a network, the registration request message to a capability management function corresponding to the capability registration identifier.

In some embodiments, the apparatus further includes:
a fourth transmitting module, used for transmitting a reporting request message to a capability management function, where the reporting request message includes one or more pieces of the following information:
an authentication/security result;
a capability reporting identifier; or
UE location information.

In some embodiments, the first obtaining module includes:
a fifth transmitting unit, used for transmitting, in case that there is only one capability management function in a network, the reporting request message to the capability management function.

In some embodiments, the first obtaining module includes:
a sixth transmitting unit, used for transmitting, in case that there are multiple capability management functions in a network, the reporting request message to a capability management function corresponding to the capability reporting identifier.

In some embodiments, the apparatus further includes:
a fifth transmitting module, used for transmitting a registration response message to the UE, where the registration response message is used to indicate success or failure of the capability registration;
   or,
a sixth transmitting module, used for transmitting a reporting response message to the UE, where the reporting response message is used to indicate success or failure of capability reporting.

In some embodiments, in case that the registration request message is further used for network registration, the apparatus further includes:
a second performing module, used for performing UE network authentication and/or security procedure.

In an embodiment, the apparatus for capability registration provided in embodiments of the present application may implement all the method steps implemented by the method embodiment with the network device as the executing subject, and may achieve the same technical effects. Therefore, the same parts and beneficial effects as the method embodiment in this embodiment will not be described here.

FIG. 16 is a third schematic structural diagram of an apparatus for capability registration according to an embodiment of the present application. As shown in FIG. 16, embodiments of the present application provide an apparatus for capability registration, including a second obtaining module 1601 and a second transmission module 1602.

The second obtaining module 1601 is used for obtaining a registration request message transmitted from a network device, where the registration request message transmitted from the network device is used for capability registration, and the registration request message transmitted from the network device includes one or more pieces of the following information:
an authentication/security result;
a capability registration identifier;
a capability reporting identifier; or
UE location information.

The second transmitting module 1602 is used for transmitting a registration response message to a UE, where the registration response message is used to indicate success or failure of the capability registration.

In some embodiments, the apparatus further includes:
a seventh transmitting module, used for transmitting a reporting response message to the UE, where the reporting response message is used to indicate success or failure of capability reporting.

In an embodiment, the apparatus for capability registration provided in embodiments of the present application may implement all the method steps implemented by the method embodiment with the capability management function as the executing subject, and may achieve the same technical effects. Therefore, the same parts and beneficial effects as the method embodiment in this embodiment will not be described here.

It should be noted that, the division of units/modules in embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as a separate product, it may be stored in a computer readable storage medium. Based on such understanding, the technical solutions of the present application in essence or a part of the technical solutions that contributes to the prior art, or all or part of the technical solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store a program code such as a U disk, a mobile hard disk, a read-only memory (ROM), a random access memory (RAM), a magnetic disk, or a compact disk.

Some embodiments of the present application further provide a computer-readable storage medium, where the computer-readable storage medium stores a computer program for causing a computer to perform the method for capability registration provided in the above embodiments.

In an embodiment, the computer-readable storage medium provided in embodiments of the present application may implement all the method steps implemented in the above method embodiments and achieve the same technical effects. Therefore, specific descriptions of the same parts and beneficial effects as the method embodiments in this embodiment will not be repeated here.

It should be noted that the computer-readable storage medium may be any available medium or data storage device that may be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

Additionally, it should be noted that the terms "first", "second", etc. in embodiments of the present application are used to distinguish similar objects and are not used to describe a specific order or sequence. It should be understood that the terms used in this way may be interchanged in appropriate circumstances. The embodiments of the present application may be implemented in order other than those illustrated or described herein, and the objects distinguished by "first" and "second" are usually of the same class, without limiting the number of objects. For example, the first object may be one or multiple.

In embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that associated objects before and after are in an "or" relationship.

The term "multiple" in embodiments of the present application refers to two or more quantifiers, similar to other quantifiers.

he solutions provided by the embodiments of the present application may be applicable to various systems, especially a 6G system For example, applicable systems may be a global system of mobile communication (GSM) system, a code division multiple access (CDMA) system, a wideband code division multiple access (WCDMA), general packet radio service (GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G new radio (NR) system, and a 6G system etc. These various systems include a UE and a network device. The system may also include a core network part, such as an evolved packet system (EPS), a 5G system (5GS), a 6G system (6GS) and the like.

The UE involved in the embodiments of the present application may be a device that provides voice and/or data connectivity to a user, a hand-held device with a wireless connection function, or other processing device connected to a wireless modem. In different systems, the names of the UE may be different. For example, in the 6G system, the terminal device may be referred to as a UE. A wireless UE may communicate with one or more core networks (CNs) via a radio access network (RAN), and the wireless UE may be a mobile UE, such as a mobile phone (or referred to as a cellular phone) and a computer with mobile UE, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless UE may also be referred to as a system, a subscriber unit, a subscriber station, a mobile station, a mobile, a remote station, an access point, a remote UE, an access UE, a user UE, a user agent, and a user device, which are not limited in the embodiments of the present application.

The network device involved in the embodiments of the present application may be a base station, and the base station may include multiple cells providing services for a UE. Depending on specific application scenarios, the base station may also be referred as to an access point, or may be a device in the access network that communicates with a wireless UE through one or more sectors on the air interface, or other names. The network device may be used to mutually exchange received air frames with Internet Protocol (IP) packets, and act as a router between a wireless UE and a rest part of the access network, and the rest part of the access network may include an IP communication network. The network device may also coordinate attribute management for an air interface. For example, the network device involved in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a Home evolved Node B (HeNB), a relay node (relay node), a femto, a pico base station (pico), etc., which are not limited in the embodiments of the present application. In some network structures, a network device may include a centralized unit (CU) node and a distributed unit (DU) node, and the centralized unit and the distributed unit may also be geographically separated.

Multi-input multi-output (MIMO) transmission may be performed between the network device and the UE using one or more antennas and the MIMO transmission may be single user MIMO (SU-MIMO) or multiple user MIMO (MU-MIMO). According to the form and number of antenna combinations, MIMO transmission may be 2D-MIMO, 3D-MIMO, FD-MIMO, or massive-MIMO, and may also be diversity transmission, precoding transmission, or beamforming transmission, etc.

Those skilled in the art should understand that the embodiments of the present application may be provided as methods, systems, or computer program products. Therefore, the present application may take the form of a fully hardware implementation, a fully software implementation, or a combination of software and hardware implementation. Moreover, the present application may take the form of a computer program product implemented on one or more computer usable storage medium (including but not limited to disk storage and optical storage) containing computer usable program code.

The present application is described with reference to flow charts and/or block diagrams of methods, apparatus (systems), and computer program products according to embodiments of the present application. It should be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It is apparent to those skilled in the art that various modifications and variations may be made in the present application without departing from the scope of the present application. As such, provided that these modifications and variations of the present application fall within the scope of the claims of the present application and their equivalents, the present application is also intended to cover such modifications and variations.

## Claims

1. A method for capability registration, performed by a user equipment (UE), comprising:
transmitting a registration request message to a network, wherein the registration request message is used for capability registration, and the registration request message comprises one or more pieces of the following information:
a registration type;
a security parameter;
a capability registration identifier;
a capability type;
a capability reporting identifier; or
capability information.

2. The method of claim 1, further comprising:
obtaining a registration response message fed back from the network, wherein the registration response message is used to indicate success or failure of the capability registration;
or,
obtaining a reporting response message fed back from the network, wherein the reporting response message is used to indicate success or failure of capability reporting.

3. The method of claim 1 or 2, wherein transmitting the registration request message to the network comprises:
in case that there is only one capability management function in the network, transmitting the registration request message to the capability management function.

4. The method of claim 1 or 2, wherein transmitting the registration request message to the network comprises:
in case that there are multiple capability management functions in the network, transmitting the registration request message to a capability management function corresponding to the capability registration identifier.

5. The method of claim 1 or 2, wherein the registration type comprises an initial registration type and a mobile registration update.

6. The method of claim 1 or 2, wherein the security parameter comprises capability authentication data.

7. The method of claim 1 or 2, wherein the capability registration identifier is used to represent one or more capability registration indications.

8. The method of claim 1 or 2, wherein the capability reporting identifier is used to represent one or more capability reporting indications.

9. The method of claim 1 or 2, wherein the capability type comprises one or more of the following types:
a data node type;
an artificial intelligence (AI) node type;
a callable capability type; or
an open capability type.

10. The method of claim 1 or 2, wherein the capability information comprises one or more pieces of the following information:
a data collection capability;
a data preprocessing capability;
a data forwarding capability;
a data storage capability;
a data analysis capability;
a protocol supported by the UE;
an application (APP) supported by the UE;
an artificial intelligence (AI) model supported by the UE; or
an artificial intelligence (AI) algorithm supported by the UE.

11. A method for capability registration, performed by a network device, comprising:
obtaining a registration request message transmitted from a user equipment (UE), wherein the registration request message transmitted from the UE is used for capability registration, and the registration request message transmitted from the UE comprises one or more pieces of the following information:
a registration type;
a security parameter;
a capability registration identifier;
a capability type;
a capability reporting identifier; or
capability information.

12. The method of claim 11, further comprising:
performing UE capability authentication and/or security procedure based on the capability registration identifier and the capability type.

13. The method of claim 12, further comprising:
transmitting the registration request message to a capability management function, wherein the registration request message transmitted to the capability management function comprises one or more pieces of the following information:
an authentication/security result;
a capability registration identifier; or
UE location information.

14. The method of claim 13, wherein transmitting the registration request message to the capability management function comprises:
in case that there is only one capability management function in a network, transmitting the registration request message to the capability management function.

15. The method of claim 13, wherein transmitting the registration request message to the capability management function comprises:
in case that there are multiple capability management functions in a network, transmitting the registration request message to a capability management function corresponding to the capability registration identifier.

16. The method of claim 12, further comprising:
transmitting a reporting request message to a capability management function, wherein the reporting request message comprises one or more pieces of the following information:
an authentication/security result;
a capability reporting identifier; or
UE location information.

17. The method of claim 16, wherein transmitting the reporting request message to the capability management function comprises:
in case that there is only one capability management function in a network, transmitting the reporting request message to the capability management function.

18. The method of claim 16, wherein transmitting the reporting request message to the capability management function comprises:
in case that there are multiple capability management functions in a network, transmitting the reporting request message to a capability management function corresponding to the capability reporting identifier.

19. The method of any of claims 11 to 18, further comprising:
transmitting a registration response message to the UE, wherein the registration response message is used to indicate success or failure of the capability registration;
or,
transmitting a reporting response message to the UE, wherein the reporting response message is used to indicate success or failure of capability reporting.

20. The method of any of claims 11 to 18, wherein in case that the registration request message is further used for network registration, the method further comprises:
performing UE network authentication and/or security procedure.

21. A method for capability registration, performed by a capability management function, comprising:
obtaining a registration request message transmitted from a network device, wherein the registration request message transmitted from the network device is used for capability registration, and the registration request message transmitted from the network device comprises one or more pieces of the following information:
an authentication/security result;
a capability registration identifier;
a capability reporting identifier; or
user equipment (UE) location information;
transmitting a registration response message to a UE, wherein the registration response message is used to indicate success or failure of the capability registration.

22. The method of claim 21, further comprising:
transmitting a reporting response message to the UE, wherein the reporting response message is used to indicate success or failure of capability reporting.

23. A user equipment (UE), comprising a memory, a transceiver, and a processor, wherein
the memory is used for storing a computer program; the transceiver is used for transmitting and receiving data under control of the processor; and the processor is used for reading the computer program in the memory and performing the following operations:
transmitting a registration request message to a network, wherein the registration request message is used for capability registration, and the registration request message comprises one or more pieces of the following information:
a registration type;
a security parameter;
a capability registration identifier;
a capability type;
a capability reporting identifier; or
capability information.

24. The UE of claim 23, wherein the processor is further used for reading the computer program in the memory and performing the following operations:
obtaining a registration response message fed back from the network, wherein the registration response message is used to indicate success or failure of the capability registration;
or,
obtaining a reporting response message fed back from the network, wherein the reporting response message is used to indicate success or failure of capability reporting.

25. The UE of claim 23 or 24, wherein transmitting the registration request message to the network comprises:
in case that there is only one capability management function in the network, transmitting the registration request message to the capability management function.

26. The UE of claim 23 or 24, wherein transmitting the registration request message to the network comprises:
in case that there are multiple capability management functions in the network, transmitting the registration request message to a capability management function corresponding to the capability registration identifier.

27. The UE of claim 23 or 24, wherein the registration type comprises an initial registration type and a mobile registration update.

28. The UE of claim 23 or 24, wherein the security parameter comprises capability authentication data.

29. The UE of claim 23 or 24, wherein the capability registration identifier is used to represent one or more capability registration indications.

30. The UE of claim 23 or 24, wherein the capability reporting identifier is used to represent one or more capability reporting indications.

31. The UE of claim 23 or 24, wherein the capability type comprises one or more of the following types:
a data node type;
an artificial intelligence (AI) node type;
a callable capability type; or
an open capability type.

32. The UE of claim 23 or 24, wherein the capability information comprises one or more pieces of the following information:
a data collection capability;
a data preprocessing capability;
a data forwarding capability;
a data storage capability;
a data analysis capability;
a protocol supported by the UE;
an application (APP) supported by the UE;
an artificial intelligence (AI) model supported by the UE; or
an artificial intelligence (AI) algorithm supported by the UE.

33. A network device, comprising a memory, a transceiver, and a processor, wherein
the memory is used for storing a computer program; the transceiver is used for transmitting and receiving data under control of the processor; and the processor is used for reading the computer program in the memory and performing the following operations:
obtaining a registration request message transmitted from a user equipment (UE), wherein the registration request message transmitted from the UE is used for capability registration, and the registration request message transmitted from the UE comprises one or more pieces of the following information:
a registration type;
a security parameter;
a capability registration identifier;
a capability type;
a capability reporting identifier; or
capability information.

34. The network device of claim 33, wherein the processor is further used for reading the computer program in the memory and performing the following operations:
performing UE capability authentication and/or security procedure based on the capability registration identifier and the capability type.

35. The network device of claim 34, wherein the processor is further used for reading the computer program in the memory and performing the following operations:
transmitting the registration request message to a capability management function, wherein the registration request message transmitted to the capability management function comprises one or more pieces of the following information:
an authentication/security result;
a capability registration identifier; or
UE location information.

36. The network device of claim 35, wherein transmitting the registration request message to the capability management function comprises:
in case that there is only one capability management function in a network, transmitting the registration request message to the capability management function.

37. The network device of claim 35, wherein transmitting the registration request message to the capability management function comprises:
in case that there are multiple capability management functions in a network, transmitting the registration request message to a capability management function corresponding to the capability registration identifier.

38. The network device of claim 34, wherein the processor is further used for reading the computer program in the memory and performing the following operations:
transmitting a reporting request message to a capability management function, wherein the reporting request message comprises one or more pieces of the following information:
an authentication/security result;
a capability reporting identifier; or
UE location information.

39. The network device of claim 38, wherein transmitting the reporting request message to the capability management function comprises:
in case that there is only one capability management function in a network, transmitting the reporting request message to the capability management function.

40. The network device of claim 38, wherein transmitting the reporting request message to the capability management function comprises:
in case that there are multiple capability management functions in a network, transmitting the reporting request message to a capability management function corresponding to the capability reporting identifier.

41. The network device of any of claims 33 to 40, wherein the processor is further used for reading the computer program in the memory and performing the following operations:
transmitting a registration response message to the UE, wherein the registration response message is used to indicate success or failure of the capability registration;
or,
transmitting a reporting response message to the UE, wherein the reporting response message is used to indicate success or failure of capability reporting.

42. The network device of any of claims 33 to 40, wherein in case that the registration request message is further used for network registration, the processor is further used for reading the computer program in the memory and performing the following operations:
performing UE network authentication and/or security procedure.

43. A capability management function, comprising memory, transceiver, and processor,
wherein
the memory is used for storing a computer program; the transceiver is used for transmitting and receiving data under control of the processor; and the processor is used for reading the computer program in the memory and performing the following operations:
obtaining a registration request message transmitted from a network device, wherein the registration request message transmitted from the network device is used for capability registration, and the registration request message transmitted from the network device comprises one or more pieces of the following information:
an authentication/security result;
a capability registration identifier;
a capability reporting identifier; or
user equipment (UE) location information;
transmitting a registration response message to a UE, wherein the registration response message is used to indicate success or failure of the capability registration.

44. The capability management function of claim 43, wherein the processor is used for reading the computer program in the memory and performing the following operations:
transmitting a reporting response message to the UE, wherein the reporting response message is used to indicate success or failure of capability reporting.

45. An apparatus for capability registration, comprising:
a first transmitting module, used for transmitting a registration request message to a network, wherein the registration request message is used for capability registration, and the registration request message comprises one or more pieces of the following information:
a registration type;
a security parameter;
a capability registration identifier;
a capability type;
a capability reporting identifier; or
capability information.

46. The apparatus of claim 45, further comprising:
a third obtaining module, used for obtaining a registration response message fed back from the network, wherein the registration response message is used to indicate success or failure of the capability registration;
or,
a fourth obtaining module, used for obtaining a reporting response message fed back from the network, wherein the reporting response message is used to indicate success or failure of capability reporting.

47. The apparatus of claim 45 or 46, wherein the first transmitting module comprises:
a first transmitting unit, used for transmitting, in case that there is only one capability management function in the network, the registration request message to the capability management function.

48. The apparatus of claim 45 or 46, wherein the first transmitting module comprises:
a second transmitting unit, used for transmitting, in case that there are multiple capability management functions in the network, the registration request message to a capability management function corresponding to the capability registration identifier.

49. The apparatus of claim 45 or 46, wherein the registration type comprises an initial registration type and a mobile registration update.

50. The apparatus of claim 45 or 46, wherein the security parameter comprises capability authentication data.

51. The apparatus of claim 45 or 46, wherein the capability registration identifier is used to represent one or more capability registration indications.

52. The apparatus of claim 45 or 46, wherein the capability reporting identifier is used to represent one or more capability reporting indications.

53. The apparatus of claim 45 or 46, wherein the capability type comprises one or more of the following types:
a data node type;
an artificial intelligence (AI) node type;
a callable capability type; or
an open capability type.

54. The apparatus of claim 45 or 46, wherein the capability information comprises one or more pieces of the following information:
a data collection capability;
a data preprocessing capability;
a data forwarding capability;
a data storage capability;
a data analysis capability;
a protocol supported by the UE;
an application (APP) supported by the UE;
an artificial intelligence (AI) model supported by the UE; or
an artificial intelligence (AI) algorithm supported by the UE.

55. An apparatus for capability registration, comprising:
a first obtaining module, used for obtaining a registration request message transmitted from a user equipment (UE), wherein the registration request message transmitted from the UE is used for capability registration, and the registration request message transmitted from the UE comprises one or more pieces of the following information:
a registration type;
a security parameter;
a capability registration identifier;
a capability type;
a capability reporting identifier; or
capability information.

56. The apparatus of claim 55, further comprising:
a first performing module, used for performing UE capability authentication and/or security procedure based on the capability registration identifier and the capability type.

57. The apparatus of claim 56, further comprising:
a third transmitting module, used for transmitting the registration request message to a capability management function, wherein the registration request message transmitted to the capability management function comprises one or more pieces of the following information:
an authentication/security result;
a capability registration identifier; or
UE location information.

58. The apparatus of claim 57, wherein the first obtaining module comprises:
a third transmitting unit, used for transmitting, in case that there is only one capability management function in a network, the registration request message to the capability management function.

59. The apparatus of claim 57, wherein the first obtaining module comprises:
a fourth transmitting unit, used for transmitting, in case that there are multiple capability management functions in a network, the registration request message to a capability management function corresponding to the capability registration identifier.

60. The apparatus of claim 56, further comprising:
a fourth transmitting module, used for transmitting a reporting request message to a capability management function, wherein the reporting request message comprises one or more pieces of the following information:
an authentication/security result;
a capability reporting identifier; or
UE location information.

61. The apparatus of claim 60, wherein the first obtaining module comprises:
a fifth transmitting unit, used for transmitting, in case that there is only one capability management function in a network, the reporting request message to the capability management function.

62. The apparatus of claim 60, wherein the first obtaining module comprises:
a sixth transmitting unit, used for transmitting, in case that there are multiple capability management functions in a network, the reporting request message to a capability management function corresponding to the capability reporting identifier.

63. The apparatus of any of claims 55 to 62, further comprising:
a fifth transmitting module, used for transmitting a registration response message to the UE, wherein the registration response message is used to indicate success or failure of the capability registration;
or,
a sixth transmitting module, used for transmitting a reporting response message to the UE, wherein the reporting response message is used to indicate success or failure of capability reporting.

64. The apparatus of any of claims 55 to 62, wherein in case that the registration request message is further used for network registration, the apparatus further comprises:
a second performing module, used for performing UE network authentication and/or security procedure.

65. An apparatus for capability registration, comprising:
a second obtaining module, used for obtaining a registration request message transmitted from a network device, wherein the registration request message transmitted from the network device is used for capability registration, and the registration request message transmitted from the network device comprises one or more pieces of the following information:
an authentication/security result;
a capability registration identifier;
a capability reporting identifier; or
user equipment (UE) location information;
a second transmitting module, used for transmitting a registration response message to a UE, wherein the registration response message is used to indicate success or failure of the capability registration.

66. The apparatus of claim 65, further comprising:
a seventh transmitting module, used for transmitting a reporting response message to the UE, wherein the reporting response message is used to indicate success or failure of capability reporting.

67. A computer-readable storage medium, wherein the computer-readable storage medium stores a computer program, and the computer program is used to cause a computer to perform the method of any of claims 1 to 10.

68. A computer-readable storage medium, wherein the computer-readable storage medium stores a computer program, and the computer program is used to cause a computer to perform the method of any of claims 11 to 20.

69. A computer-readable storage medium, wherein the computer-readable storage medium stores a computer program, and the computer program is used to cause a computer to perform the method of claim 21 or 22.
